# EUROPÄISCHE PATENTSCHRIFT

(11) **EP 4 277 769 B1**
(45) Veröffentlichungstag und Bekanntmachung des Hinweises auf die Patenterteilung: **12.03.2025**
(21) Anmeldenummer: 22729092.1
(22) Anmeldetag: 11.05.2022
(51) Int. Cl.: B25J 15/04

(54) **GREIFVORRICHTUNG UND SYSTEM UMFASSEND EINE GREIFVORRICHTUNG**
GRIPPING DEVICE AND SYSTEM COMPRISING A GRIPPING DEVICE
DISPOSITIF DE PRÉHENSION ET SYSTÈME COMPRENANT UN DISPOSITIF DE PRÉHENSION

(30) Priorität: 26.05.2021 DE 102021113553
(43) Veröffentlichungstag der Anmeldung: 22.11.2023
(73) Patentinhaber: Syntegon Technology GmbH, 71332 Waiblingen (DE)
(72) Erfinder: ILGENFRITZ, Markus, 91555 Feuchtwangen (DE); KRAUSS, Ulrich, 74532 Ilshofen (DE); NAGLER, Stefan, 73485 Unterschneidheim (DE); STEGMEIER, Samuel, 74594 Wüstenau (DE)
(74) Vertreter: Novagraaf Group
(86) Internationale Anmeldenummer: PCT/EP2022/062802
(87) Internationale Veröffentlichungsnummer: WO 2022/248226

(56) Entgegenhaltungen:
- EP-A1- 3 738 721
- EP-A2- 2 664 421
- DD-B1- 252 343
- DE-A1- 3 705 884
- DE-U1- 8 706 525
- JP-B2- 5 365 156
- US-A- 4 676 541
- US-A- 4 715 636
- US-A1- 2019 111 575
- US-B1- 9 401 300

## Beschreibung

Die Erfindung betrifft eine Greifvorrichtung mit den Merkmalen des Oberbegriffs des Patentanspruchs 1, gemäß US 4,676,641 A.

Beispielsweise aus der DE 10 2006 045 783 A1 ist eine Greifvorrichtung bekannt, die in Verbindung mit einem Roboter dazu dient, Objekte in einer Produktionsumgebung automatisiert, schnell und präzise zu handhaben. Bei den Objekten handelt es sich beispielsweise um Behältnisse oder Werkstücke. Die aus der DE 10 2006 045 783 A1 bekannte Greifvorrichtung weist zwei an einem Gehäuse bewegbar angeordnete Schlitten auf, die jeweils ein Greifelement tragen. Die Greifelemente sind über jeweilige Schraubverbindungen an den Schlitten befestigt.

Aus der EP 3 305 480 A1 ist eine weitere Greifvorrichtung mit einem Grundkörper und mit zwei an dem Grundkörper gelagerten Schlitten bekannt. Die Schlitten sind mit jeweils einem Schnellspannadapter verbunden. Die Schnellspannadapter weisen jeweils eine mechanische Schnittstelle auf, an der jeweils ein Greifelement lösbar befestigbar ist. Die mechanische Schnittstelle umfasst eine mit dem Grundkörper verschraubte Klemmspindel.

Die vorgenannten, aus dem Stand der Technik bekannten Greifvorrichtungen ermöglichen es bei Bedarf, für eine bestimmte Objektart geeignete erste Greifelemente durch zweite Greifelemente auszutauschen, die für eine andere Objektart geeignet sind. Allerdings bedarf es für einen solchen Austausch eines manuellen Eingriffs durch eine Bedienperson, welche jeweilige Schraubverbindungen lösen muss, um erste Greifelemente zu entfernen. Die Schraubverbindungen müssen dann nochmals manuell betätigt werden, um zweite Greifelemente wieder zu fixieren. Diese Vorgänge erhöhen die Nebenzeiten in einer automatisierten Produktionsumgebung.

Hiervon ausgehend liegt der vorliegenden Erfindung die Aufgabe zugrunde, eine Greifvorrichtung bereitzustellen, die einen schnellen und einfachen Wechsel eines Greifelements erlaubt.

Diese Aufgabe wird bei einer Greifvorrichtung der eingangs genannten Art durch die kennzeichnenden Merkmale des Patentanspruchs 1 gelöst.

Das Entriegelungselement ist insbesondere unbeweglich an dem Grundkörper angeordnet und bewegt sich jedenfalls mit dem Grundkörper mit, folgt also einer Handhabungsbewegung eines Roboters, an dem der Grundkörper üblicherweise fixiert **ist.** Die Verriegelungseinrichtung hingegen ist relativ zu dem Grundkörper und dem Entriegelungselement entlang der Greifachse in eine Entriegelungsposition bewegbar. In dieser Entriegelungsposition überführt das Entriegelungselement das Verriegelungselement aus dessen Verriegelungslage in eine Freigabelage, in welcher das Greifelement von dem Adapterabschnitt lösbar ist. Auf diese Weise kann durch eine Bewegung des Adapterabschnitts und der Verriegelungseinrichtung längs der Greifachse die Verriegelungseinrichtung betätigt werden; eine externe Betätigung der Verriegelungseinrichtung ist nicht erforderlich. Die erfindungsgemäße Greifvorrichtung unterstützt somit einen schnellen Wechsel eines Greifelements und ermöglicht eine schnelle Anpassung der Greifvorrichtung an unterschiedliche Objektarten.

Die erfindungsgemäße Greifvorrichtung ist insbesondere in einer aseptischen Produktionsumgebung vorteilhaft, in welcher manuelle, potentiell kontaminierende Eingriffe durch Bedienpersonen nach Möglichkeit vermieden werden sollen. Insbesondere handelt es sich bei der aseptischen Produktionsumgebung um einen Isolator, weiter vorzugsweise um einen handschuhlosen Isolator.

Vorzugsweise ist das mindestens eine Greifelement der Greifvorrichtung zur Handhabung von Objekten ausgebildet, die als Wannen, Tubs, Vials, Spritzen oder Karpulen ausgebildet sind. Beispielsweise können mit einem ersten Greifelement aus einem Vorratsbehälter Wannen oder Tubs entnommen werden. Die Wannen oder Tubs enthalten beispielsweise Vials, Spritzen oder Karpulen. Nach dem Wechsel des Greifelements an der Greifvorrichtung können dann einzelne Vials, Spritzen oder Karpulen gegriffen werden.

Die Greifvorrichtung weist eine Antriebseinheit zum Antreiben des mindestens einen Adapterabschnitts längs der Greifachse auf, derart, dass die Verriegelungseinrichtung in die Entriegelungsposition überführbar ist. Die Antriebseinheit verbringt den Adapterabschnitt und somit auch die Verriegelungseinrichtung mit dessen Verriegelungselement in eine Position längs der Greifachse, in welcher das bezogen auf die Greifachse ortsfeste Entriegelungselement mit dem Verriegelungselement zusammenwirkt und dieses aus dessen Verriegelungslage in die Freigabelage überführt.

Vorzugsweise weist die Greifvorrichtung nur eine einzige Antriebseinheit auf, welche sowohl den Adapterabschnitt in vorstehend beschriebener Weise als auch das damit lösbar verriegelbare Greifelement längs der Greifachse antreibt. Somit kann dieselbe Antriebseinheit entlang der Greifachse Greifbewegungen und Betätigungsbewegungen zur Überführung der Verriegelungseinrichtung in die Entriegelungsposition durchführen. Hierdurch kann eine kompakte und einfach aufgebaute Greifvorrichtung bereitgestellt werden.

Die Antriebseinheit ist vorzugsweise als eine elektrische oder pneumatische Antriebseinheit ausgebildet.

Bei einer weiteren Ausführungsform weist die Greifvorrichtung eine Überwachungseinrichtung auf, welche die Lage und/oder Position des Adapterabschnitts, und/oder die Lage und/oder Position des Verriegelungselements, und/oder das Vorhandensein eines Greifelements an dem Adapterabschnitt überwacht. Die Überwachungseinrichtung ist beispielsweise dazu eingerichtet, zu überwachen, in welcher Position sich der Adapterabschnitt relativ zu dem Grundkörper entlang der Greifachse befindet und/oder ob sich das Verriegelungselement in der Verriegelungslage oder der Freigabelage befindet. Alternativ oder zusätzlich hierzu wird das Vorhandensein (bzw. die Abwesenheit) eines Greifelements an dem Adapterabschnitt geprüft. Auf diese Weise können verschiedene Funktionszustände der Greifvorrichtung überwacht werden, bspw. ob ein Greifelement - in der Entriegelungsposition der Verriegelungseinrichtung - freigegeben und abnehmbar ist, oder ob - in allen anderen Positionen der Verriegelungseinrichtung - das Greifelement sicher mit dem Adapterabschnitt verriegelt ist.

Optional sind auch Greifvorgänge von zu greifenden Objekten überwachbar. Die Überwachungseinrichtung weist insbesondere ein Kamerasystem und/oder mindestens einen Sensor auf, der beispielsweise als induktiver, optischer und/oder kapazitiver Sensor ausgebildet ist.

Vorzugsweise umfasst die Greifvorrichtung eine Steuerungseinrichtung, wobei die Steuerungseinrichtung zur Steuerung einer vorgenannten Antriebseinheit und/oder einer vorgenannten Überwachungseinrichtung ausgebildet ist. Ist die Steuerungseinrichtung dazu ausgebildet, die Antriebseinheit anzusteuern, kann mittels der Steuerungseinrichtung die Bewegung des Greifelements entlang der Greifachse gesteuert werden, insbesondere für einen Greifvorgang und/oder zum Entriegeln des Greifelements.

Insbesondere ist eine mit der Steuerungseinrichtung verbundene Eingabeeinrichtung vorgesehen, über welche ein Bediener die Greifvorrichtung direkt ansteuern kann oder ein automatisierter Bewegungsablauf der Greifvorrichtung vorgegeben wird.

Es ist auch möglich, dass die Steuerungseinrichtung nur die Überwachungseinrichtung steuert. Bevorzugt ist es jedoch, dass die Steuerungseinrichtung sowohl die Antriebseinheit als auch die Überwachungseinrichtung steuert. Somit kann die Steuerungseinrichtung die Antriebseinheit ansteuern und dabei Parameter berücksichtigen, die von der Überwachungseinrichtung erfasst werden. Insbesondere ist somit das Greifen eines Objekts und das Entriegeln des Greifelements ohne bedienerseitige Kontrolle durchführbar.

Insbesondere ist eine mit der Steuerungseinrichtung verbundene Ausgabeeinrichtung vorgesehen. Die Ausgabeeinrichtung kann beispielsweise ein Warnsignal ausgeben, wenn ein fehlerbehafteter Zustand der Greifvorrichtung erkannt wird, beispielsweise eine von der Überwachungseinrichtung erkannte Fehlstellung des Greifelements oder des Verriegelungselements.

Vorzugsweise korrespondiert die Entriegelungsposition der Verriegelungseinrichtung mit einer End- oder Umkehrlage des Adapterabschnitts entlang der Greifachse. Die End- oder Umkehrlage des Adapterabschnitts korrespondiert vorzugsweise mit einer maximal geöffneten Greiflage des Greifelements. Alternativ hierzu korrespondiert die End- oder Umkehrlage des Adapterabschnitts mit einer maximal geschlossenen Greiflage des Greifelements. Dadurch, dass die End- oder Umkehrlagen mit einer maximal geöffneten oder geschlossenen Greiflage des Greifelements korrespondieren, wird der für eine Greifbewegung nutzbare Bewegungsweg des Greifelements nicht oder nur sehr geringfügig eingeschränkt. Beispielsweise beträgt ein Betätigungsweg des Adapterabschnitts, der mit einer Überführung des Verriegelungselements aus der Verriegelungslage in die Freigabelage korrespondiert, nur wenige Millimeter, beispielsweise 2 bis 3 mm.

Bei einer bevorzugten Ausführungsform ist die Greifvorrichtung als Außengreifer ausgebildet, mit welchem ein zu greifendes Objekt von außen gegriffen wird, wobei die Entriegelungsposition mit einer außenliegenden End- und Umkehrlage und einer maximal geöffneten Greiflage des Greifelements korrespondiert.

Bevorzugt ist es, wenn die Verriegelungseinrichtung ein Vorspannelement umfasst, welches das Verriegelungselement in die Verriegelungslage drängt. Das Vorspannelement ist vorzugsweise als Feder ausgebildet. Das Vorspannelement stellt sicher, dass - in Positionen außerhalb der Entriegelungsposition der Verriegelungseinrichtung - das Verriegelungselement in seiner Verriegelungslage verbleibt. Somit wird eine unbeabsichtigte Freigabe des Greifelements von dem Adapterabschnitt in allen von der Entriegelungsposition abweichenden Positionen der Verriegelungseinrichtung verhindert.

Bei einer bevorzugten Ausführungsform weist die Verriegelungseinrichtung mindestens einen an dem Grundkörper angeordneten Anschlag auf, der einen Bewegungsweg des Verriegelungselements begrenzt. Auf diese Weise kann mindestens eine Endlage des bewegbaren Verriegelungselements definiert werden. Eine solche Endlage korrespondiert vorzugsweise mit der Verriegelungslage oder mit der Freigabelage.

Eine in der Verriegelungslage wirksame Begrenzung des Bewegungswegs des Verriegelungselements ist insbesondere vorteilhaft, wenn das Verriegelungselement in Richtung der Verriegelungslage vorgespannt ist. Die Begrenzung stellt sicher, dass auch in der Verriegelungslage noch zumindest ein Teil einer Vorspannkraft anliegt.

Eine in der Freigabelage wirksame Begrenzung des Bewegungswegs des Verriegelungselements ist ebenfalls insbesondere dann vorteilhaft, wenn das Verriegelungselement in Richtung der Verriegelungslage vorgespannt ist. Die Begrenzung ermöglicht es, die Freigabelage von der Ausgestaltung (Größe, Geometrie) eines Vorspannelements zu definieren.

Insbesondere ist das Verriegelungselement bei einer Bewegung zwischen seiner Verriegelungslage und seiner Freigabelage längs einer Bewegungsachse bewegbar, die vorzugsweise parallel zu der Greifachse orientiert ist. Somit kann das Verriegelungselement gemeinsam mit dem Adapterabschnitt bewegt und entlang der oder parallel zu der Greifachse in die Freigabelage überführt werden.

Bei einer bevorzugten Ausführungsform wirkt das Verriegelungselement mit einem dem Greifelement zugeordneten Verriegelungsabschnitt zusammen, wobei das Verriegelungselement und der Verriegelungsabschnitt in der Verriegelungslage des Verriegelungselements miteinander formschlüssig verbunden sind, wobei der Formschluss vorzugsweise entlang einer Formschlussachse wirksam ist, welche winklig, insbesondere senkrecht, zu der Greifachse verläuft.

Das Greifelement wird - wenn das Verriegelungselement seine Verriegelungslage einnimmt - mittels des Verriegelungsabschnitts entlang der Formschlussachse winklig zu der Greifachse an dem Adapterabschnitt gehalten, sodass das Greifelement mittels des Formschlusses an dem Adapterabschnitt lösbar verriegelt ist. Der Formschluss zwischen dem Verriegelungselement und dem Verriegelungsabschnitt wird gelöst, wenn das Verriegelungselement in die Freigabelage überführt wird, was mit der Entriegelung des Greifelements von dem Adapterabschnitt einhergeht. Bevorzugt ist der Formschluss derart ausgebildet, dass das Greifelement mittels des Verriegelungsabschnitts senkrecht zu der Greifachse, insbesondere senkrecht zu einer Kontaktebene zwischen Greifelement und Adapterabschnitt, gehalten wird. Der Formschluss zwischen Verriegelungselement und dem Verriegelungsabschnitt ermöglicht ein zuverlässiges Halten des Greifelements in allen Positionen abweichend von der Entriegelungsposition des Adapterabschnitts.

Vorzugsweise weist die Greifvorrichtung mindestens eine von der Verriegelungseinrichtung unabhängige Halteeinrichtung zum Halten des mindestens einen Greifelements an dem mindestens einen Adapterabschnitt auf, wobei die Halteeinrichtung dem Greifelement und dem Adapterabschnitt jeweils zugeordnete Formschlusselemente aufweisen, welche in ihrem miteinander gefügten Zustand längs der Greifachse miteinander formschlüssig sind.

Die Formschlusselemente halten das Greifelement an dem Adapterabschnitt - vorzugsweise sowohl in der Verriegelungs-, als auch in der Freigabelage des Verriegelungselements - längs der Greifachse, sodass das Greifelement entlang der Greifachse gesehen relativ zu dem Adapterabschnitt unbewegbar ist. Die Halteeinrichtung dient zum lösbaren Halten des Greifelements an dem Adapterabschnitt, wodurch ein unkontrolliertes Abfallen des Greifelements von dem Adapterabschnitt in einem Zustand verhindert wird, bei welchem das Verriegelungselement seine Freigabelage einnimmt.

Bevorzugt ist die Halteeinrichtung so ausgebildet, dass das Greifelement mittels der Formschlusselemente entlang einer Führungsachse an dem Adapterabschnitt geführt ist, wobei die Führungsachse vorzugsweise senkrecht zu der Greifachse verläuft, sodass das Greifelement in einer zu der Greifachse senkrechten Richtung von dem Adapterabschnitt abnehmbar und auf den Adapterabschnitt aufsetzbar ist. Demnach kann das Greifelement - in Entriegelungsposition des Adapterabschnitts - von dem Adapterabschnitt gelöst und mittels einer Handhabungseinrichtung, beispielsweise einem Roboter, gehandhabt werden.

In einer bevorzugten Ausführungsform umfassen die Formschlusselemente ein erstes Formschlusselement, das einen Aufnahmebereich zur Aufnahme eines Vorsprungs aufweist, der an oder durch ein zweites Formschlusselement gebildet ist.

Der Vorsprung greift in den Aufnahmebereich ein und hält das Greifelement an dem Adapterabschnitt. Das Greifelement ist in der Entriegelungsposition des Adapterabschnitts längs der Erstreckungsachse des Vorsprungs von dem Adapterabschnitt lösbar.

Insbesondere ist vorgesehen, dass der Vorsprung an dem Greifelement ausgebildet ist und dass der Aufnahmebereich an dem Adapterabschnitt ausgebildet ist. Bei einer alternativen Ausführungsform ist der Vorsprung an dem Adapterabschnitt ausgebildet und der Aufnahmebereich an dem Greifelement ausgebildet. Insbesondere ist der Vorsprung als Bolzen ausgebildet, der in einen als entsprechende Ausnehmung gestalteten Aufnahmebereich des ersten Formschlusselements einführbar oder eingeführt ist. Bevorzugt hält der Bolzen das Greifelement entlang der Greifachse gesehen formschlüssig an dem Adapterabschnitt; dabei ist das Greifelement in Richtung der Erstreckungsachse des Bolzens auf den Adapterabschnitt aufsetzbar und von dem Adapterabschnitt abnehmbar.

Vorzugsweise weist der Adapterabschnitt mindestens einen Unterdruckanschluss auf, der mit einer Unterdruckeinrichtung des Greifelements kommuniziert. Mittels der Unterdruckeinrichtung und eines entsprechend ausgebildeten Greifelements an der Greifvorrichtung ist das Greifen oder ein unterstütztes kraft- und/oder formschlüssiges Greifen eines Objekts mit Unterdruck möglich.

Bei einer bevorzugten Ausführungsform weist die Greifvorrichtung zwei Greifelemente auf, die ein Greifelementpaar bilden, wobei vorzugsweise die Greifelemente an jeweiligen Adapterabschnitten des Grundkörpers lösbar verriegelbar sind und die Greifelemente längs der Greifachse in einander entgegengesetzten Richtungen bewegbar sind, insbesondere antreibbar sind.

Mit zwei Greifelementen, die längs der Greifachse in einander entgegengesetzten Richtungen bewegbar sind, ist ein Objekt von zwei Seiten aus greifbar. Ferner ist das Überführen der Adapterabschnitte längs der Greifachse in jeweilige Entriegelungspositionen mit zueinander symmetrisch angeordneten Entriegelungselementen möglich, vorzugsweise mit gleichzeitiger Entriegelung der beiden Greifelemente. Das Greifen mit zwei Greifelementen ermöglich ein präzises und zentriertes Greifen eines Objekts von zwei Seiten aus. Ein Verkippen des Objekts wird verhindert. Dabei kann die Greifvorrichtung als Innengreifer oder Außengreifer ausgebildet sein. Das Greifelementpaar ist insbesondere zum formschlüssigen und/oder kraftschlüssigen Greifen eines Objekts ausgebildet.

Die Erfindung betrifft ferner ein System, das eine vorstehend beschriebene Greifvorrichtung mit einem ersten Greifelementpaar umfasst, ferner ein zweites Greifelementpaar, ein Magazin und einen Roboter, wobei der Grundkörper der Greifvorrichtung an einem Wirkbereich des Roboters angeordnet ist, und wobei wahlweise das erste Greifelementpaar oder das zweite Greifelementpaar mit den Adapterabschnitten des Grundkörpers lösbar verriegelbar oder verriegelt ist und wobei das andere Greifelementpaar in dem Magazin lagerbar oder gelagert ist.

Demnach ist entweder das erste Greifelementpaar, das zweite Greifelementpaar oder keines der Greifelementpaare mit den Adapterabschnitten des Grundkörpers verriegelt. Der Roboter ermöglicht eine Bewegung eines angekoppelten Greifelementpaars an ein zu greifendes Objekt. Nach Greifen des Objekts kann der Roboter mittels des angekoppelten Greifelementpaars das gegriffene Objekt in eine andere Position oder Lage verbringen.

Das erfindungsgemäße System ermöglicht ein automatisches Entriegeln eines an den Adapterabschnitten verriegelten ersten Greifelementpaars. Ferner ist mittels des Roboters ein automatisiertes Ablegen eines entriegelten Greifelementpaars in dem Magazin möglich; sowie ein lösbar verriegelbares Aufnehmen des zweiten Greifelementpaars an dem Adapterabschnitt.

In vorteilhafter Weise ermöglicht das System einen automatisierten Wechsel zwischen dem ersten und dem zweiten Greifelementpaar. Der automatisierte Wechsel zwischen unterschiedlichen Greifelementpaaren ermöglicht einen flexiblen und effizienten Einsatz des Systems in einer automatisierten Produktionsumgebung. Es können insbesondere Objekte verschiedener Größe und Form gegriffen werden. Vorzugsweise sind entsprechend der vorgesehenen Anwendung weitere Greifelementpaare in dem Magazin gelagert.

Vorzugsweise weist das Magazin Lagerabschnitte auf, welche jeweils zur Lagerung eines Greifelementpaars ausgebildet sind. Eine Abnahme eines ersten Greifelementpaars von den Adapterabschnitten der Greifvorrichtung und ein Fügen der Adapterabschnitte mit einem zweiten Greifelementpaar erfolgt vorzugsweise in der Entriegelungsposition der Verriegelungseinrichtung, sodass das Verriegelungselement während des Austauschs der Greifelementpaare in seiner Freigabelage verbleibt.

Bei einer bevorzugten Ausführungsform ist in einem an einem der Lagerabschnitte gelagerten Zustand eines Greifelementpaars dieses Greifelementpaar formschlüssig in oder an dem Magazin gehalten. Das Magazin und die Greifelemente weisen entsprechende Formschlusselemente auf. Das formschlüssige Halten des Greifelementpaars ermöglicht das gezielte Ablegen und positionsgenaue Aufnehmen eines Greifelementpaars.

Weitere Merkmale und Vorteile der Erfindung sind Gegenstand der nachfolgenden Beschreibung und der zeichnerischen Darstellung eines bevorzugten Ausführungsbeispiels. Es zeigen:
- Fig. 1: eine perspektivische Ansicht eines Systems mit einer Greifvorrichtung;
- Fig. 2: eine perspektivische Ansicht der Greifvorrichtung gemäß Fig. 1;
- Fig. 3a: eine Draufsicht der Greifvorrichtung gemäß einer in Fig. 2 mit "III" bezeichneten Schnittebene, wobei zwei Greifelemente der Greifvorrichtung beispielhaft in einer ersten Greiflage dargestellt sind;
- Fig. 3b: einen in Fig. 3a mit IIIb bezeichneten Ausschnitt in vergrößerter Darstellung;
- Fig. 4a: eine der Fig. 3 entsprechende Draufsicht, wobei die Greifelemente in einer weiter geöffneten, gerade noch nutzbaren Greiflage dargestellt sind;
- Fig. 4b: einen in Fig. 4a mit IVb bezeichneten Ausschnitt in vergrößerter Darstellung;
- Fig. 5a: eine der Fig. 4a entsprechende Draufsicht, wobei die Greifelemente um einen Betätigungsweg einer Verriegelungseinrichtung der Greifvorrichtung weiter geöffnet sind;
- Fig. 5b: einen in Fig. 5a mit Vb bezeichneten Ausschnitt in vergrößerter Darstellung;
- Fig. 6: eine Vorderansicht der Greifvorrichtung gemäß Fig. 5a, jedoch ohne Greifelemente; und
- Fig. 7: eine Draufsicht eines der Greifelemente.

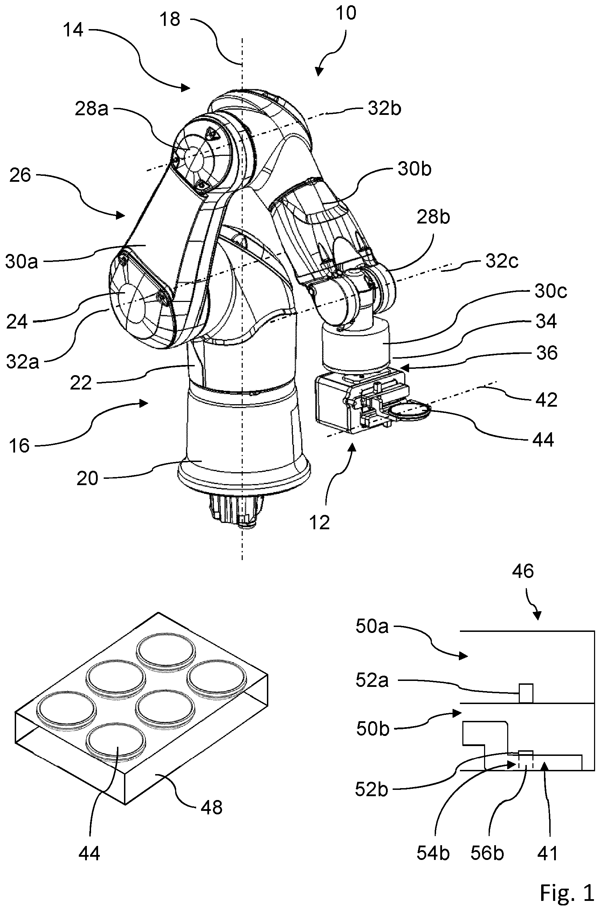

In Fig. 1 ist ein System dargestellt, das insgesamt mit dem Bezugszeichen 10 bezeichnet ist. Das System 10 umfasst eine Greifvorrichtung 12 und einen Roboter 14, der vorzugsweise mehrere Bewegungsfreiheitsgrade aufweist. Das System 10 ist beispielsweise in einer aseptischen Produktionsumgebung angeordnet.

Ein vorzugsweise ortsfestes Gestell 16 des Roboters 14 weist eine Gestellachse 18 auf, die vorzugsweise vertikal orientiert ist. Das Gestell 16 ist zweiteilig ausgeführt. Ein beispielsweise an einer (nicht dargestellten) Halterung oder einem Boden der Produktionsumgebung befestigtes erstes Gestellteil 20 ist unbewegbar. Das erste Gestellteil 20 bildet einen Sockel des Roboters 14. Ein entlang der Gestellachse 18 benachbart zu dem ersten Gestellteil 20 angeordnetes zweites Gestellteil 22 ist um die Gestellachse 18 herum und relativ zu dem ersten Gestellteil 20 verdrehbar. Das zweite Gestellteil 22 bildet eine Schulter des Roboters 14, wobei die Gestellachse 18 die erste Achse von vorzugsweise sechs Achsen des Roboters 14 bildet.

Der Roboter 14 weist einen Roboterarm 26 auf, der über ein erstes Gelenk 24 bewegbar an dem zweiten Gestellteil 22 angelenkt ist. Der Roboterarm 26 weist drei Armabschnitte 30a, 30b, 30c auf, die untereinander über Zwischengelenke 28a, 28b miteinander gelenkig verbunden sind. Dem ersten Gelenk 24 und den Zwischengelenken 28a, 28b jeweils zugeordnete Gelenkdrehachsen 32a, 32b, 32c verlaufen vorzugsweise quer, insbesondere senkrecht, zu der Gestellachse 18.

Der Roboterarm 26 weist ein dem Gestell 16 abgewandtes Ende 34 auf, an welchem ein Wirkbereich 36 des Roboters 14 angeordnet ist. An dem Wirkbereich 36 ist die Greifvorrichtung 12 angeordnet.

Die Greifvorrichtung 12 weist zwei lösbar verriegelbare Greifelemente 38 und 39 auf. Die beiden Greifelemente 38 und 39 bilden ein Greifelementpaar 40. Die Greifelemente 38 und 39 sind in einander entgegengesetzten Richtungen bewegbar, und zwar entlang einer Greifachse 42. Die Greifachse 42 ist beispielsweise orthogonal zu der Gestellachse 18 ausgerichtet.

Der mehrgelenkige Roboter 14 ermöglicht es, die Greifvorrichtung 12 innerhalb der Produktionsumgebung in eine beliebige Position und Orientierung zu verbringen. Bei der in der Zeichnung dargestellten Ausführungsform weist die Greifvorrichtung 12 Greifelemente 38 und 39 auf, die zum Greifen eines petrischalenförmigen Objekts 44 ausgebildet sind. Eine Greifbewegung der Greifelemente 38 und 39 erfolgt entlang der Greifachse 42. Sobald die Greifelemente 38 und 39 das Objekt 44 gegriffen haben, kann der Roboter 14 das Objekt 44 gemeinsam mit der Greifvorrichtung 12 handhaben.

Das System 10 weist ferner ein Magazin 46 und einen Vorratsbehälter 48 mit daraus entnehmbaren Objekten 44 auf. Das Magazin 46 und der Vorratsbehälter 48 sind in Handhabungsreichweite des Roboters 14 angeordnet.

Das Magazin 46 weist vorzugsweise mindestens zwei voneinander getrennte Lagerabschnitte 50a, 50b auf. Die Lagerabschnitte 50a, 50b sind jeweils zur Lagerung mindestens eines Greifelementpaars 40 ausgebildet. Zu diesem Zweck weist jedes der Lagerabschnitte 50a, 50b jeweils mindestens zwei beispielsweise bolzenförmige Formschlusselement 52a, 52b auf. Jedes der Greifelemente 38 und 39 eines Greifelementpaars 40 weist mit diesen Formschlusselementen 52a, 52b korrespondierende Formschlusselemente 54a, 54b auf, die beispielsweise als zylindrische Ausnehmungen 56a und 56b ausgebildet sind. Die Greifelemente 38 und 39 eines Greifelementpaars 40 sind mit ihren Ausnehmungen 56a, 56b jeweils formschlüssig an den Formschlusselementen 52a, 52b gehalten und somit an oder in dem Magazin 46 bzw. in einem der Lagerabschnitte 50a, 50b bevorratet und dort lösbar fixiert.

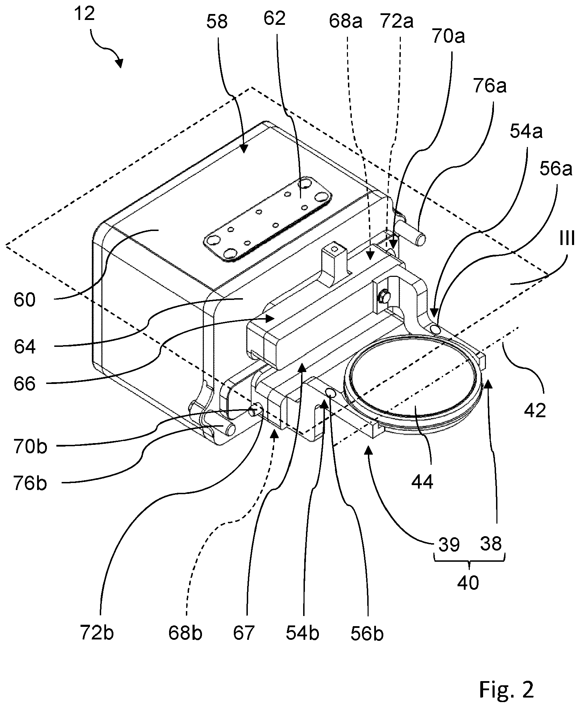

In Fig. 2 sind die Greifvorrichtung 12 des Systems 10 und ein gegriffenes Objekt 44 dargestellt. Die Greifvorrichtung 12 weist einen blockförmigen Grundkörper 58 auf. An einer dem Roboter 14 zugewandten ersten Seite 60 des Grundkörpers 58 ist eine Roboterschnittstelle 62 ausgebildet. Über die Roboterschnittstelle 62 ist der Grundkörper 58 an den Wirkbereich 36 des Roboters 14 lösbar ankoppelbar. Benachbart zu einer weiteren Seite 64 des Grundkörpers 58 sind zwei Adapterabschnitte 66 und 67 angeordnet, welche an dem Grundkörper 58 gelagert sind. Die Adapterabschnitte 66 und 67 sind in einander entgegengesetzten und zu der Greifachse 42 parallelen Bewegungsrichtungen relativ zu dem Grundkörper 58 bewegbar.

Jedem der beiden Adapterabschnitte 66, 67 ist jeweils eine Verriegelungseinrichtung 68a, 68b zugeordnet. Diese Verriegelungseinrichtungen 68a, 68b können in die Adapterabschnitte 66, 67 integriert sein (in Fig. 2 durch gestrichelte Linien angedeutet).

Die Verriegelungseinrichtungen 68a, 68b weisen jeweils ein Verriegelungselement 70a, 70b auf. Die Verriegelungselemente 70a, 70b erstrecken sich jeweils parallel zu der Greifachse 42, ragen durch eine jeweilige Aussparung 72a, 72b aus einem jeweiligen Adapterabschnitt 66, 67 heraus und sind relativ zu dem jeweiligen Adapterabschnitt 66, 67 bewegbar.

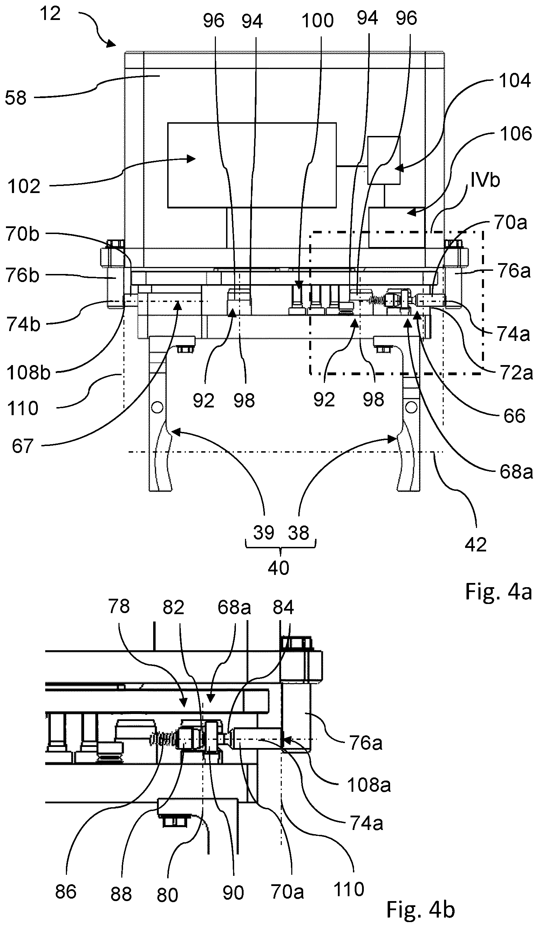

Die Verriegelungselemente 70a, 70b sind insbesondere entlang einer jeweiligen Bewegungsachse 74a und 74b bewegbar (vgl. Fig. 4a), die jeweils insbesondere parallel zu der Greifachse 42 orientiert sind.

Jede Verriegelungseinrichtung 68a, 68b dient dazu, jeweils ein Greifelement 38, 39 an jeweils einem der Adapterabschnitte 66, 67 lösbar zu verriegeln. Die Verriegelungseinrichtungen 68a, 68b bewegen sich jeweils gemeinsam mit dem jeweiligen Adapterabschnitt 66, 67 entlang der Greifachse 42.

Zum Entriegeln eines Greifelements 38, 39 sind zwei Entriegelungselemente 76a und 76b vorgesehen, die an dem Grundkörper 58 befestigt sind. Die Entriegelungselemente 76a und 76b sind beispielsweise jeweils als bolzenförmige Anschläge ausgebildet, welche in einen Bewegungsraum der Adapterabschnitte 66, 67 hineinragen. Die Entriegelungselemente 76a, 76b stehen beispielsweise senkrecht über die weitere Seite 64 des Grundkörpers 58 hervor. Die Entriegelungselemente 76a und 76b bewegen sich gemeinsam mit dem Grundkörper 58 der Greifvorrichtung 12 und folgen somit einer Handhabungsbewegung eines Roboters 14.

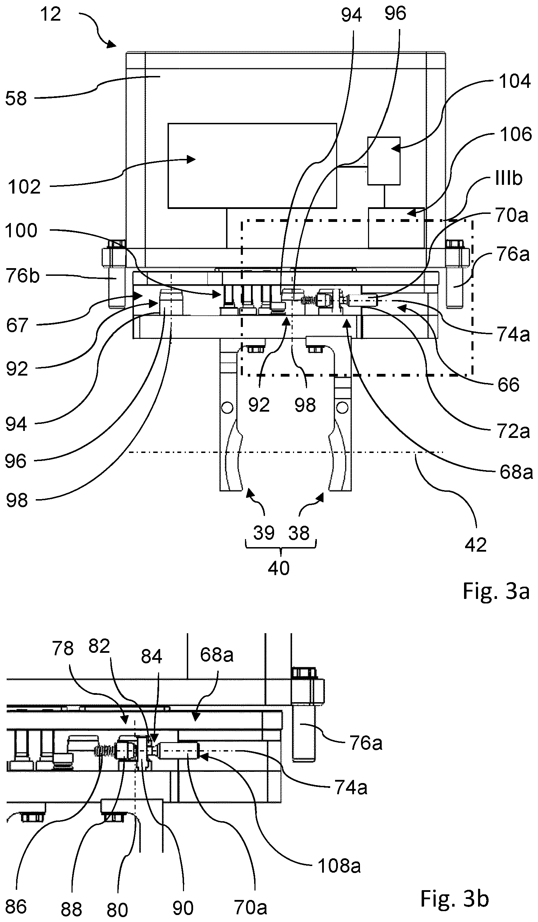

In dem in Fig. 3a dargestellten Zustand nehmen die Greifelemente 38, 39 beispielhaft eine erste Greiflage ein, wobei die Greifelemente mit den jeweiligen Adapterabschnitten 66, 67 verriegelt sind.

In Fig. 3a und 3b sind der Grundkörper 58 und der Adapterabschnitt 66 geschnitten dargestellt. In Fig. 3b ist die Verriegelungseinrichtung 68a vergrößert dargestellt.

Der Adapterabschnitt 67 und die Verriegelungseinrichtung 68b weisen einen zu dem Adapterabschnitt 66 und der Verriegelungseinrichtung 68a identischen, symmetrisch gespiegelten Aufbau auf.

In dem in Fig. 3b dargestellten Zustand nimmt das Verriegelungselement 70a eine Verriegelungslage ein, in welcher das Verriegelungselement 70a formschlüssig mit einem dem Greifelement 38 zugeordneten Verriegelungsabschnitt 78 zusammenwirkt.

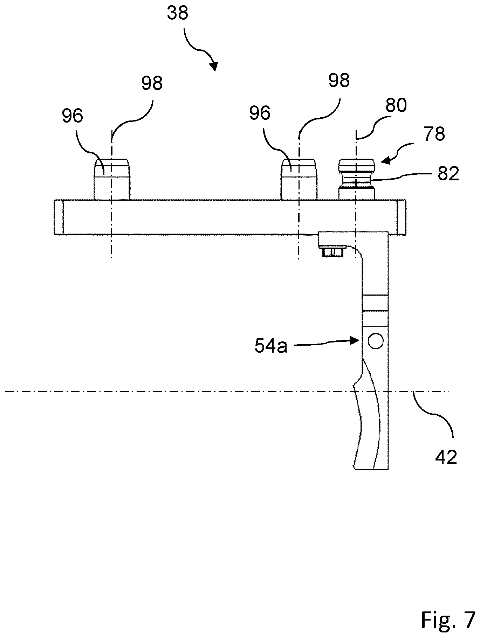

Der Verriegelungsabschnitt 78 ist in Fig. 7 in Alleinstellung dargestellt. Der Formschluss des Verriegelungselement 70a mit dem Verriegelungsabschnitt 78 ist vorzugsweise entlang einer Formschlussachse 80 wirksam, die beispielsweise senkrecht zu der Greifachse 42 orientiert ist. Der Verriegelungsabschnitt 78 weist eine ringförmig umlaufende Nut 82 auf, die sich um die Formschlussachse 80 herum erstreckt.

Das Verriegelungselement 70a weist einen endseitig angeordneten Verriegelungsbereich 88 auf. In der Verriegelungslage des Verriegelungselement 70a wirkt dieser Verriegelungsbereich 88 entlang der Formschlussachse 80 gesehen formschlüssig mit der Nut 82 des Verriegelungsabschnitts 78 des Greifelements 38 zusammen.

Auf diese Weise ist das Greifelement 38 mit dem Adapterabschnitt 66 verriegelt. Dieser Zustand der Verriegelungseinrichtung 68a ist in Fig. 3b dargestellt.

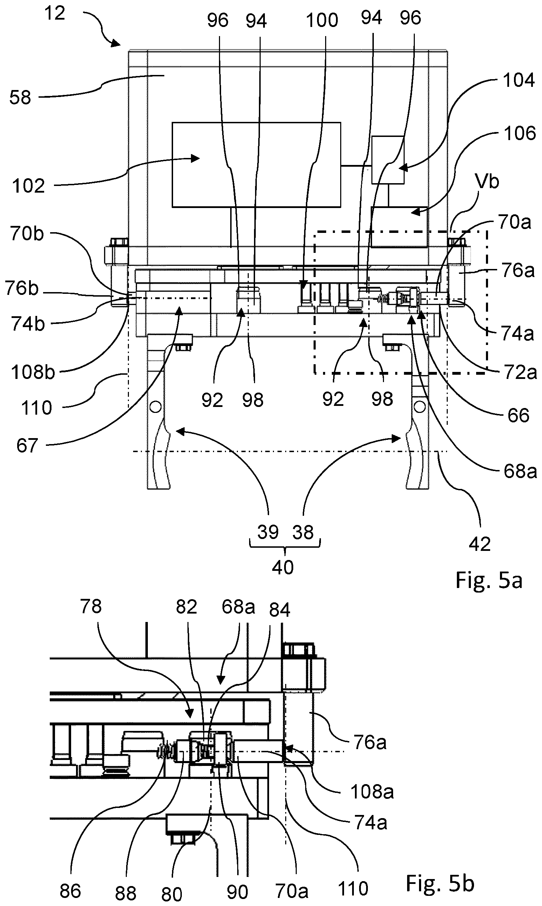

Das Verriegelungselement 70a weist einen in Längserstreckung mittig angeordneten Einstich 84 auf. In einer Freigabelage des Verriegelungselements 70a ist der Einstich 84 auf Höhe der Nut 82 des Verriegelungsabschnitts 78 des Greifelements 38 angeordnet, vgl. Fig. 5b. In diesem Zustand ist der Verriegelungsbereich 88 außerhalb der Nut 82 des Verriegelungsabschnitts 78 des Greifelements 38 angeordnet, sodass der Formschluss aufgelöst und sodass das Greifelement 38 entlang der Formschlussachse 80 von dem Adapterabschnitt 66 lösbar ist.

Die Verriegelungseinrichtung 68a weist ein Vorspannelement 86 auf, das vorzugsweise als Druckfeder ausgebildet ist. Das Vorspannelement 86 ist beispielsweise an einem dem Entriegelungselement 76a gegenüberliegenden Ende des Verriegelungselements 70a angeordnet. Das Verriegelungselement 70a ist über das Vorspannelement 86 längs der Bewegungsachse 74a in seine Verriegelungslage vorgespannt.

Die Verriegelungseinrichtung 68a umfasst ferner einen fest mit dem Adapterabschnitt 66 verbundenen Anschlag 90, der beispielsweise bolzenförmig ausgebildet ist. Der Anschlag 90 ist insbesondere quer zu der Bewegungsachse 74a des Verriegelungselements 70a orientiert und ragt in den Einstich 84 des Verriegelungselements 70a hinein.

Der Anschlag 90 dient dazu, einen Bewegungsweg des Verriegelungselements 70a längs der Bewegungsachse 74a zu begrenzen und die Endlagen des Verriegelungselements 70a zu definieren. In der Verriegelungslage (vgl. Fig. 3b) und in der Freigabelage (vgl. Fig. 5b) liegt der Anschlag 90 mit jeweils unterschiedlichen Außenflächen an jeweils einer der beiden endseitigen Begrenzungen des Einstichs 84 an.

Die Greifvorrichtung 12 weist von den Verriegelungseinrichtung 68a, 68b jeweils unabhängige Halteeinrichtungen 92 auf, die zwischen jeweils einem Adapterabschnitt 66, 67 und jeweils einem Greifelement 38, 39 wirksam sind.

Die Halteeinrichtungen 92 dienen jeweils zum lösbaren Halten des Greifelements 38 bzw. 39 an dem Adapterabschnitt 66 bzw. 67 und verhindern ein unkontrolliertes Abfallen des Greifelements 38 bzw. 39 von dem Adapterabschnitt 66 bzw. 67 in einem Zustand, in welchem das Verriegelungselement 70a bzw. 70b seine jeweilige Freigabelage einnimmt.

Jede Halteeinrichtung 92 weist Formschlusselemente 94 und 96 auf. Beispielsweise sind die Formschlusselemente 94 als Aufnahmebereiche ausgebildet, die in den Adapterabschnitten 66, 67 vorgehalten sind und zur Aufnahme von Formschlusselementen 96 dienen, die als Vorsprünge ausgebildet sind und jeweils an den Greifelementen 38, 39 vorgehalten sind.

Die Formschlusselemente 94, 96 sind derart ausgebildet, dass jedes Greifelement 38 bzw. 39 mittels der Formschlusselemente 94, 96 entlang mindestens einer Führungsachse 98 an dem Adapterabschnitt 66 bzw. 67 geführt ist. Die mindestens eine Führungsachse 98 ist insbesondere senkrecht zu der Greifachse 42 orientiert. In der Freigabelage des Verriegelungselements 70a, 70b kann das Greifelement 38, 39 entlang der Führungsachse 98 von dem Adapterabschnitt 66, 67 abgenommen werden.

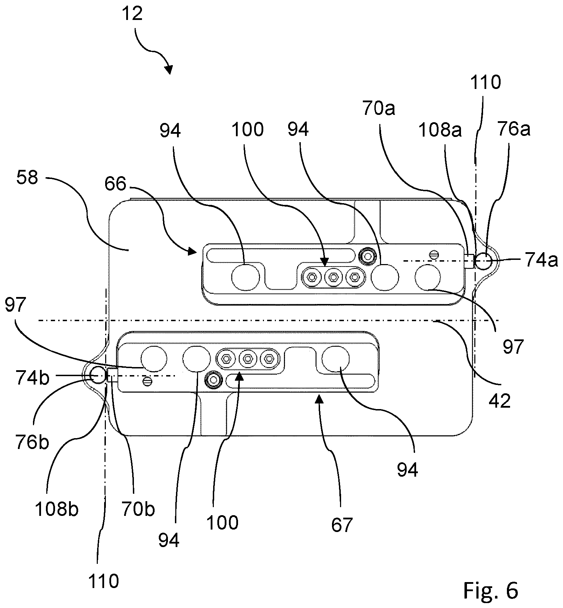

Die Adapterabschnitte 66, 67 weisen ferner Öffnungen 97 zur Einführung der Verriegelungsabschnitte 78 auf, vgl. Fig. **6****.**

Mindestens ein Adapterabschnitt 66, 67 weist in vorteilhafter Weise mindestens einen Unterdruckanschuss 100 auf, der mit einer (in der Zeichnung nicht dargestellten) Unterdruckeinrichtung des Greifelements 38 kommuniziert. Die Unterdruckeinrichtung ermöglicht das Greifen eines Objekts ausschließlich mittels Unterdruck. Alternativ hierzu ermöglicht es die Unterdruckeinrichtung, ein mechanisches Greifen eines Objekts mittels Unterdruck zu unterstützen.

Die Greifvorrichtung 12 weist eine Antriebseinheit 102 auf, die zum Antreiben der Adapterabschnitte 66, 67 längs der Antriebsachse 42 dient, vgl. Fig. 3. Die Antriebseinheit 102 ist insbesondere innerhalb des Grundkörpers 58 angeordnet. Die Antriebseinheit 102 umfasst bspw. einen Elektromotor.

Die Antriebseinheit 102 treibt beide Adapterabschnitte 66 und 67 bspw. über ein Rad- oder Zugmittelgetriebe an, bspw. indem an den Adapterabschnitten 66 und 67 jeweils eine Zahnstange angeordnet ist, die mit umfangsversetzten Abschnitten eines Antriebsrad der Antriebseinheit 102 kämmen.

Mittels der Antriebseinheit 102 kann sowohl eine Greifbewegung zum Greifen und Loslassen eines Objekts 44 als auch eine Betätigungsbewegung zur Überführung der Verriegelungseinrichtungen 68a und 68b aus einer Verriegelungsposition in eine Entriegelungsposition durchgeführt werden. In der Entriegelungsposition befinden sich die Verriegelungselemente 70a und 70b jeweils in ihrer Freigabelage.

Bei einer Greifbewegung werden die Adapterabschnitte 66 und 67 mit den Greifelementen 38 und 39 aufeinander zu bewegt; beim Loslassen eines Objekts 44 und bei der Überführung in eine Entriegelungsposition werden die Adapterabschnitte 66 und 67 mit den Greifelementen 38 und 39 voneinander weg bewegt.

Optional weist die Greifvorrichtung 12 eine Steuerungseinrichtung 104 auf. Diese ist in Fig. 3a schematisch dargestellt. Die Steuerungseinrichtung 104 ist beispielsweise in dem Grundkörper 58 angeordnet und zur Ansteuerung der Antriebseinheit 102 ausgebildet. Mit der Steuerungseinrichtung kann die Bewegung der Adapterabschnitte 66 und 67 und der Greifelemente 38 und 39 entlang der Greifachse 42 gesteuert werden.

Optional weist die Greifvorrichtung 12 eine eine Überwachungseinrichtung 106 auf. Diese ist in Fig. 3a schematisch dargestellt. Die Überwachungseinrichtung 106 umfasst beispielsweise ein Kamerasystem und/oder mindestens einen Sensor, der beispielsweise als induktiver, optischer und/oder kapazitiver Sensor ausgebildet ist.

Die Überwachungseinrichtung 106 überwacht eine Lage und/oder Position der Adapterabschnitte 66, 67, und/oder eine Lage und/oder eine Position des Verriegelungselements 70a, 70b, und/oder ein Vorhandensein der Greifelemente 38, 39 an den jeweiligen Adapterabschnitten 66 und 67.

Die Überwachungseinrichtung 106 kommuniziert in vorteilhafter Weise mit der Steuerungseinrichtung 104.

Somit kann die Steuerungseinrichtung 104 die Antriebseinheit 102 ansteuern und dabei Parameter berücksichtigen, die von der Überwachungseinrichtung 106 erfasst werden. Insbesondere ist somit das Greifen eines Objekts 44 und das Entriegeln der Greifelemente 38 und 39 ohne bedienerseitige Kontrolle durchführbar.

In den Figuren 3a und 3b ist die Verriegelungseinrichtung 68a in einem Zustand dargestellt, in welchem das Verriegelungselement 70a eine Verriegelungslage einnimmt. Davon ausgehend sind in den Figuren 4a und 4b und in den Figuren 5a und 5b Zustände dargestellt, welche die Verriegelungseinrichtung 68a bei der Überführung des Verriegelungselement 70a in dessen Freigabelage einnimmt, und zwar ausgehend von dem Beginn einer Betätigungsbewegung (vgl. Figuren 4a und 4b) bis zu dem Ende der Betätigungsbewegung (vgl. Figuren 5a und 5b).

Zum Überführen der Verriegelungseinrichtungen 68a und 68b in die jeweilige Entriegelungsposition werden die Adapterabschnitte 66 und 67 über die Antriebseinheit 102 angetrieben und entlang der Greifachse 42 voneinander weg bewegt. In Fig. 4a und 4b nehmen die Adapterabschnitte 66, 67 mit den Verriegelungselementen 70a, 70b ein Positionen ein, in welchen aus den Adapterabschnitten 66 und 67 herausragende Endflächen 108a, 108b der Verriegelungselemente 70a, 70b die jeweils zugeordneten Entriegelungselemente 76a, 76b kontaktieren. Vorzugsweise erfolgt der Kontakt querkraftfrei innerhalb von Betätigungsebenen 110, welche senkrecht zu der Greifachse 42 orientiert sind.

In dem Zustand gemäß Fig. 4a und 4b befinden sich die Verriegelungselemente 70a, 70b noch in Verriegelungslage. Der Zustand gemäß Fig. 4a und 4b korrespondiert mit einem für einen Greifvorgang maximal nutzbaren Abstand der Greifelemente 38, 39.

Werden die Adapterabschnitte 66, 67 so angetrieben, dass sich diese ausgehend von dem Zustand gemäß Fig. 4a und 4b jeweils weiter in Richtung auf die Entriegelungselemente 76a, 76b zu bewegen, bewirken die jeweiligen Kontakte der Verriegelungselemente 70a, 70b mit den zugeordneten Entriegelungselementen 76a, 76b, dass sich die Verriegelungselemente 70a, 70b nicht mehr gemeinsam mit den Adapterabschnitten 66, 67 bewegen, sondern entlang ihrer Bewegungsachsen 74a und 74b - entgegen der Bewegungsrichtung der Adapterabschnitte 66, 67 - in die Adapterabschnitte 66, 67 hinein. Auf diese Weise werden die Verriegelungselemente 70a, 70b in ihre jeweilige Freigabelage überführt. Der maximale Bewegungsweg der Verriegelungselemente 70a, 70b ist durch den Anschlag 90 definiert, wie vorstehend bereits erläutert.

Nachdem ausgehend von einer Beabstandung ein Kontakt der Verriegelungselemente 70a, 70b mit den jeweiligen Entriegelungselementen 76a, 76b hergestellt wurde, findet während der Überführung der Verriegelungselemente 70a, 70b in ihre jeweilige Freigabelage keine Relativbewegung mehr zwischen den Verriegelungselementen 70a, 70b und dem jeweils zugeordneten Entriegelungselement 76a, 76b statt. Hierdurch werden Reibung und Materialabrieb vermieden, was insbesondere für den Einsatz der Greifvorrichtung 12 in einer aseptischen Umgebung vorteilhaft ist.

Bei der Überführung der Verriegelungselemente 70a und 70b in ihre jeweilige Freigabelage werden die jeweiligen Vorspannelemente 86 entgegen der Richtung ihrer jeweiligen Vorspannkraft weiter komprimiert.

In der Freigabelage der Verriegelungselemente 70a, 70b nehmen die Verriegelungseinrichtungen 68a, 68b ihre jeweilige Entriegelungsposition ein, vgl. Fig. 5a und 5b. Die Greifelemente 38, 39 sind in dieser Entriegelungsposition entriegelt und können von den Adapterabschnitten 66, 67 gelöst werden oder dort - unter Verwendung der Halteeinrichtungen 92 - zunächst noch gehalten werden.

Optional verbringt der Roboter 14 die Greifelemente 38, 39 des ersten Greifelementpaars 40 zu dem Magazin 46, beispielsweise zu einem freien Lagerabschnitt 50a des Magazins 46.

Der Roboter 14 kann anschließend die Greifelemente eines zweiten Greifelementpaars 41 aus dem anderen Lagerabschnitt 50b aufnehmen und dort zunächst - unter Verwendung der Halteeinrichtungen 92 - noch lösbar halten.

Bewegt die Antriebseinheit 102 dann aber die Adapterabschnitte 66, 67 wieder aus der Entriegelungsposition heraus, überführen die Vorspannelemente 86 die Verriegelungselemente 70a und 70b in ihre jeweilige Verriegelungslage, sodass wieder ein bspw. in Fig. 4a und 4b dargestellter Zustand erreicht ist.

Bei dem in der Zeichnung dargestellten Ausführungsbeispiel ist die Greifvorrichtung 12 als Außengreifer ausgebildet. Es versteht sich, dass die Greifvorrichtung 12 auch als Innengreifer ausgebildet sein kann.

## Patentansprüche

1. Greifvorrichtung (12) umfassend einen an einen Roboter (14) ankoppelbaren Grundkörper (58), mindestens einen an dem Grundkörper (58) entlang einer Greifachse (42) beweglichen Adapterabschnitt (66, 67), und mindestens ein an dem Adapterabschnitt (66, 67) lösbar verriegelbares Greifelement (38, 39), wobei der Adapterabschnitt (66, 67) eine Verriegelungseinrichtung (68a, 68b) mit mindestens einem Verriegelungselement (70a, 70b) umfasst, welches in einer Verriegelungslage das Greifelement (38, 39) mit dem Adapterabschnitt (66, 67) verriegelt, wobei die Verriegelungseinrichtung (68a, 68b) entlang der Greifachse (42) in eine Entriegelungsposition bewegbar ist, in welcher das Verriegelungselement (70a, 70b) aus dessen Verriegelungslage in eine Freigabelage überführbar ist, in welcher das Greifelement von (38, 39) dem Adapterabschnitt (66, 67) lösbar ist, **dadurch gekennzeichnet, dass** die Greifvorrichtung (12) eine Antriebseinheit (102) zum Antreiben des mindestens einen Adapterabschnitts (66, 67) und des mindestens einen Greifelements (38, 39) längs der Greifachse (42) aufweist, derart, dass die Verriegelungseinrichtung (68a, 68b) in die Entriegelungsposition überführbar ist, dass an dem Grundkörper (58) ein Entriegelungselement (76a, 76b) angeordnet ist, und dass das Entriegelungselement (76a, 76b) in der Entriegelungsposition der Verriegelungseinrichtung (68a, 68b) das Verriegelungselement (70a, 70b) kontaktiert und das Verriegelungselement (70a, 70b) aus dessen Verriegelungslage in die Freigabelage überführt.

2. Greifvorrichtung (12) nach einem der vorstehenden Ansprüche, **dadurch gekennzeichnet, dass** die Greifvorrichtung (12) eine Überwachungseinrichtung (106) aufweist, welche die Lage und/oder Position des Adapterabschnitts (66, 67), und/oder die Lage und/oder Position des Verriegelungselements (70a, 70b), und/oder das Vorhandensein eines Greifelements (38, 39) an dem Adapterabschnitt (66, 67) überwacht.

3. Greifvorrichtung (12) nach einem der vorstehenden Ansprüche, **dadurch gekennzeichnet, dass** die Greifvorrichtung (12) eine Steuerungseinrichtung (104) umfasst, wobei die Steuerungseinrichtung (104) zur Steuerung der Antriebseinheit (102) und/oder der Überwachungseinrichtung (106) ausgebildet ist.

4. Greifvorrichtung (12) nach einem der vorstehenden Ansprüche, **dadurch gekennzeichnet, dass** die Entriegelungsposition der Verriegelungseinrichtung (68a, 68b) mit einer End- oder Umkehrlage des Adapterabschnitts (66, 67) entlang der Greifachse (42) korrespondiert.

5. Greifvorrichtung (12) nach einem der vorstehenden Ansprüche, **dadurch gekennzeichnet, dass** die Verriegelungseinrichtung ein Vorspannelement umfasst, welches das Verriegelungselement in die Verriegelungslage drängt.

6. Greifvorrichtung (12) nach einem der vorstehenden Ansprüche, **dadurch gekennzeichnet, dass** die Verriegelungseinrichtung (68a, 68b) mindestens einen an dem Grundkörper (58) angeordneten Anschlag (90) aufweist, der einen Bewegungsweg des Verriegelungselements (70a, 70b) begrenzt.

7. Greifvorrichtung (12) nach einem der vorstehenden Ansprüche, **dadurch gekennzeichnet, dass** das Verriegelungselement (70a, 70b) bei einer Bewegung zwischen seiner Verriegelungslage und seiner Freigabelage längs einer Bewegungsachse (74a, 74b) bewegbar ist, welche parallel zu der Greifachse (42) orientiert ist.

8. Greifvorrichtung (12) nach einem der vorstehenden Ansprüche, **dadurch gekennzeichnet, dass** das Verriegelungselement (70a, 70b) mit einem dem Greifelement (38, 39) zugeordneten Verriegelungsabschnitt (78) zusammenwirkt, wobei das Verriegelungselement (70a, 70b) und der Verriegelungsabschnitt in der Verriegelungslage des Verriegelungselements (78) miteinander formschlüssig verbunden sind, wobei der Formschluss vorzugsweise entlang einer Formschlussachse (80) wirksam ist, welche winklig, insbesondere senkrecht, zu der Greifachse (42) verläuft.

9. Greifvorrichtung (12) nach einem der vorstehenden Ansprüche, **dadurch gekennzeichnet, dass** die Greifvorrichtung (12) mindestens eine von der Verriegelungseinrichtung (68a, 68b) unabhängige Halteeinrichtung (92) zum Halten des mindestens einen Greifelements (38, 39) an dem mindestens einen Adapterabschnitt (66, 67) aufweist, wobei die Halteeinrichtung (92) dem Greifelement (38, 39) und dem Adapterabschnitt (66, 67) jeweils zugeordnete Formschlusselemente (94, 96) aufweisen, welche in ihrem miteinander gefügten Zustand längs der Greifachse (42) miteinander formschlüssig sind.

10. Greifvorrichtung (12) nach Anspruch 9, **dadurch gekennzeichnet, dass** die Formschlusselemente (94, 96) ein erstes Formschlusselement (94) umfassen, das einen Aufnahmebereich zur Aufnahme eines Vorsprungs aufweist, der an oder durch ein zweites Formschlusselement (96) gebildet ist.

11. Greifvorrichtung (12) nach einem der vorstehenden Ansprüche, **dadurch gekennzeichnet, dass** der Adapterabschnitt (66, 67) mindestens einen Unterdruckanschluss (100) aufweist, der mit einer Unterdruckeinrichtung des Greifelements (12) kommuniziert.

12. Greifvorrichtung (12) nach einem der vorstehenden Ansprüche, **dadurch gekennzeichnet, dass** das Entriegelungselement (76a, 76b) - bei Ankopplung des Grundkörpers (58) an einen Roboter (14) - einer Handhabungsbewegung des Roboters (14) folgt.

13. Greifvorrichtung (12) nach einem der vorstehenden Ansprüche, **dadurch gekennzeichnet, dass** das Entriegelungselement (76a, 76b) unbeweglich an dem Grundkörper (58) angeordnet ist und/oder dass das Entriegelungselement (76a, 76b) von einer Bewegung des Adapterabschnitts (66, 67) relativ zu dem Grundkörper (58) unabhängig ist.

14. Greifvorrichtung (12) nach einem der vorstehenden Ansprüche, **dadurch gekennzeichnet, dass** die Greifvorrichtung (12) zwei Greifelemente (38, 39) aufweist, die ein Greifelementpaar (40) bilden, wobei vorzugsweise die Greifelemente (38, 39) an jeweiligen Adapterabschnitten (66, 67) des Grundkörpers (58) lösbar verriegelbar sind und die Greifelemente (38, 39) längs der Greifachse (42) in einander entgegengesetzten Richtungen bewegbar sind, insbesondere antreibbar sind.

15. System (10) umfassend eine Greifvorrichtung (12) nach Anspruch 14 mit einem ersten Greifelementpaar (40), ferner umfassend ein zweites Greifelementpaar (41), ein Magazin (46) und einen Roboter (14), wobei der Grundkörper (58) der Greifvorrichtung (12) an einem Wirkbereich (36) des Roboters (14) angeordnet ist, und wobei wahlweise das erste Greifelementpaar (40) oder das zweite Greifelementpaar (41) mit den Adapterabschnitten (66, 67) des Grundkörpers (58) lösbar verriegelbar oder verriegelt ist und wobei das andere Greifelementpaar in dem Magazin (46) lagerbar oder gelagert ist.

16. System nach Anspruch 15, **dadurch gekennzeichnet, dass** das Magazin (46) Lagerabschnitte (50a, 50b) aufweist, welche jeweils zur Lagerung eines Greifelementpaars (40, 41) ausgebildet sind.

17. System nach Anspruch 16, **dadurch gekennzeichnet, dass** in einem an einem der Lagerabschnitte (50a, 50b) gelagerten Zustand eines Greifelementpaars (40, 41) dieses Greifelementpaar (40, 41) formschlüssig in oder an dem Magazin (46) gehalten ist.

## Claims

1. Gripping apparatus (12) comprising a main body (58) which can be coupled to a robot (14), at least one adapter portion (66, 67) which can be moved on the main body (58) along a gripping axis (42), and at least one gripping element (38, 39) which can be releasably locked to the adapter portion (66, 67), wherein the adapter portion (66, 67) comprises a locking device (68a, 68b) having at least one locking element (70a, 70b) which, in a locking position, locks the gripping element (38, 39) to the adapter portion (66, 67), wherein the locking device (68a, 68b) can be moved along the gripping axis (42) into an unlocking position in which the locking element (70a, 70b) can be transferred from its locking position into a release position in which the gripping element can be released from (38, 39) the adapter portion (66, 67), **characterized in that** the gripping apparatus (12) comprises a drive unit (102) for driving the at least one adapter portion (66, 67) and the at least one gripping element (38, 39) along the gripping axis (42) in such a way that the locking device (68a, 68b) can be transferred into the unlocking position, **in that** an unlocking element (76a, 76b) is arranged on the main body (58), **and in that** the unlocking element (76a, 76b) contacts the locking element (70a, 70b) in the unlocking position of the locking device (68a, 68b) and transfers the locking element (70a, 70b) from its locking position into the release position.

2. Gripping apparatus (12) according to any of the preceding claims, **characterized in that** the gripping apparatus (12) comprises a monitoring device (106) which monitors the location and/or position of the adapter portion (66, 67), and/or the location and/or position of the locking element (70a, 70b), and/or the presence of a gripping element (38, 39) on the adapter portion (66, 67).

3. Gripping apparatus (12) according to either of the preceding claims, **characterized in that** the gripping apparatus (12) comprises a control device (104), wherein the control device (104) is designed to control the drive unit (102) and/or the monitoring device (106).

4. Gripping apparatus (12) according to any of the preceding claims, **characterized in that** the unlocking position of the locking device (68a, 68b) corresponds to an end position or a reversal position of the adapter portion (66, 67) along the gripping axis (42).

5. Gripping apparatus (12) according to any of the preceding claims, **characterized in that** the locking device comprises a biasing element which pushes the locking element into the locking position.

6. Gripping apparatus (12) according to any of the preceding claims, **characterized in that** the locking device (68a, 68b) has at least one stop (90) which is arranged on the main body (58) and delimits a movement path of the locking element (70a, 70b).

7. Gripping apparatus (12) according to any of the preceding claims, **characterized in that** the locking element (70a, 70b) is movable, during a movement between its locking position and its release position, along a movement axis (74a, 74b) which is oriented in parallel with the gripping axis (42).

8. Gripping apparatus (12) according to any of the preceding claims, **characterized in that** the locking element (70a, 70b) interacts with a locking portion (78) associated with to the gripping element (38, 39), wherein the locking element (70a, 70b) and the locking portion are connected in a form-fitting manner to one another in the locking position of the locking element (78), wherein the form fit is preferably operative along a form-fitting axis (80) which extends at an angle, in particular perpendicularly, to the gripping axis (42).

9. Gripping apparatus (12) according to any of the preceding claims, **characterized in that** the gripping apparatus (12) comprises at least one holding device (92), which is independent of the locking device (68a, 68b), for holding the at least one gripping element (38, 39) on the at least one adapter portion (66, 67), wherein the holding device (92) has form-fitting elements (94, 96) which are associated with the gripping element (38, 39) and the adapter portion (66, 67), and which, in their joined state, are form-fitting with one another along the gripping axis (42).

10. Gripping apparatus (12) according to claim 9, **characterized in that** the form-fitting elements (94, 96) comprise a first form-fitting element (94) which has a receiving region for receiving a projection which is formed on or by a second form-fitting element (96).

11. Gripping apparatus (12) according to any of the preceding claims, **characterized in that** the adapter portion (66, 67) has at least one vacuum connection (100) which communicates with a vacuum device of the gripping element (12).

12. Gripping apparatus (12) according to any of the preceding claims, **characterized in that** the unlocking element (76a, 76b), when the main body (58) is coupled to a robot (14), follows a handling movement of the robot (14).

13. Gripping apparatus (12) according to any of the preceding claims, **characterized in that** the unlocking element (76a, 76b) is arranged immovably on the main body (58) and/or **in that** the unlocking element (76a, 76b) is independent of a movement of the adapter portion (66, 67) relative to the main body (58).

14. Gripping apparatus (12) according to any of the preceding claims, **characterized in that** the gripping apparatus (12) comprises two gripping elements (38, 39) which form a gripping element pair (40), wherein the gripping elements (38, 39) can preferably be releasably locked to respective adapter portions (66, 67) of the main body (58) and the gripping elements (38, 39) can be moved, in particular driven, in opposite directions along the gripping axis (42).

15. System (10) comprising a gripping apparatus (12) according to claim 14 comprising a first gripping element pair (40), further comprising a second gripping element pair (41), a magazine (46) and a robot (14), wherein the main body (58) of the gripping apparatus (12) is arranged on an operating region (36) of the robot (14), and wherein optionally the first gripping element pair (40) or the second gripping element pair (41) is or can be releasably locked to the adapter portions (66, 67) of the main body (58), and wherein the other gripping element pair is can be or is stored in the magazine (46).

16. System according to claim 15, **characterized in that** the magazine (46) has storage portions (50a, 50b) which are each designed to store a gripping element pair (40, 41).

17. System according to claim 16, **characterized in that,** in a state of a gripping element pair (40, 41) in which it is stored on one of the storage portions (50a, 50b), this gripping element pair (40, 41) is held in a form-fitting manner in or on the magazine (46).

## Revendications

1. Dispositif de préhension (12) comprenant un corps de base (58) pouvant être accouplé à un robot (14), au moins une section d'adaptateur (66, 67) mobile sur le corps de base (58) le long d'un axe de préhension (42), et au moins un élément de préhension (38, 39) pouvant être verrouillé de manière détachable sur la section d'adaptateur (66, 67), la section d'adaptateur (66, 67) comprenant un appareil de verrouillage (68a, 68b) comportant au moins un élément de verrouillage (70a, 70b), lequel verrouille l'élément de préhension (38, 39) sur la section d'adaptateur (66, 67) dans une situation de verrouillage, l'appareil de verrouillage (68a, 68b) étant déplaçable le long de l'axe de préhension (42) dans une position de déverrouillage dans laquelle l'élément de verrouillage (70a, 70b) peut être transféré de sa situation de verrouillage à une situation de libération dans laquelle l'élément de préhension peut être détaché de (38, 39) la section d'adaptateur (66, 67), **caractérisé en ce que** le dispositif de préhension (12) présente une unité d'entraînement (102) pour l'entraînement de l'au moins une section d'adaptateur (66, 67) et de l'au moins un élément de préhension (38, 39) le long de l'axe de préhension (42), de telle sorte que l'appareil de verrouillage (68a, 68b) peut être transféré vers la position de déverrouillage, **en ce qu'**un élément de déverrouillage (76a, 76b) est disposé sur le corps de base (58), **et en ce que** l'élément de déverrouillage (76a, 76b), dans la position de déverrouillage de l'appareil de verrouillage (68a, 68b), vient en contact avec l'élément de verrouillage (70a, 70b) et transfère l'élément de verrouillage (70a, 70b) de sa situation de verrouillage à la situation de libération.

2. Dispositif de préhension (12) selon l'une des revendications précédentes, **caractérisé en ce que** le dispositif de préhension (12) présente un appareil de surveillance (106), lequel surveille la situation et/ou la position de la section d'adaptateur (66, 67), et/ou la situation et/ou la position de l'élément de verrouillage (70a, 70b), et/ou la présence d'un élément de préhension (38, 39) sur la section d'adaptateur (66, 67).

3. Dispositif de préhension (12) selon l'une des revendications précédentes, **caractérisé en ce que** le dispositif de préhension (12) comprend un appareil de commande (104), l'appareil de commande (104) étant réalisé pour la commande de l'unité d'entraînement (102) et/ou de l'appareil de surveillance (106).

4. Dispositif de préhension (12) selon l'une des revendications précédentes, **caractérisé en ce que** la position de déverrouillage de l'appareil de verrouillage (68a, 68b) correspond à une situation finale ou d'inversion de la section d'adaptateur (66, 67) le long de l'axe de préhension (42).

5. Dispositif de préhension (12) selon l'une des revendications précédentes, **caractérisé en ce que** l'appareil de verrouillage comprend un élément de précontrainte, lequel pousse l'élément de verrouillage dans la situation de verrouillage.

6. Dispositif de préhension (12) selon l'une des revendications précédentes, **caractérisé en ce que** l'appareil de verrouillage (68a, 68b) présente au moins une butée (90) disposée sur le corps de base (58), laquelle limite une course de déplacement de l'élément de verrouillage (70a, 70b).

7. Dispositif de préhension (12) selon l'une des revendications précédentes, **caractérisé en ce que** l'élément de verrouillage (70a, 70b) est déplaçable, lors d'un déplacement entre sa situation de verrouillage et sa situation de libération, le long d'un axe de déplacement (74a, 74b), lequel est orienté parallèlement à l'axe de préhension (42).

8. Dispositif de préhension (12) selon l'une des revendications précédentes, **caractérisé en ce que** l'élément de verrouillage (70a, 70b) coopère avec une section de verrouillage (78) associée à l'élément de préhension (38, 39), l'élément de verrouillage (70a, 70b) et la section de verrouillage étant reliés l'un à l'autre par complémentarité de forme dans la situation de verrouillage de l'élément de verrouillage (78), la complémentarité de forme étant active de préférence le long d'un axe de complémentarité de forme (80), lequel s'étend de manière angulaire, en particulier perpendiculairement, par rapport à l'axe de préhension (42).

9. Dispositif de préhension (12) selon l'une des revendications précédentes, **caractérisé en ce que** le dispositif de préhension (12) présente au moins un appareil de retenue (92) indépendant de l'appareil de verrouillage (68a, 68b) pour retenir l'au moins un élément de préhension (38, 39) sur l'au moins une section d'adaptateur (66, 67), l'appareil de retenue (92) présentant des éléments à complémentarité de forme (94, 96) associés respectivement à l'élément de préhension (38, 39) et à la section d'adaptateur (66, 67), lesquels sont en complémentarité de forme les uns avec les autres le long de l'axe de préhension (42) dans leur état assemblé les uns aux autres.

10. Dispositif de préhension (12) selon la revendication 9,
**caractérisé en ce que** les éléments à complémentarité de forme (94, 96) comprennent un premier élément à complémentarité de forme (94) qui présente une région de réception pour la réception d'une saillie qui est formée sur ou par un second élément à complémentarité de forme (96).

11. Dispositif de préhension (12) selon l'une des revendications précédentes, **caractérisé en ce que** la section d'adaptateur (66, 67) présente au moins un raccord à dépression (100) qui communique avec un appareil à dépression de l'élément de préhension (12).

12. Dispositif de préhension (12) selon l'une des revendications précédentes, **caractérisé en ce que** l'élément de déverrouillage (76a, 76b), lors de l'accouplement du corps de base (58) à un robot (14), suit un déplacement de manipulation du robot (14).

13. Dispositif de préhension (12) selon l'une des revendications précédentes, **caractérisé en ce que** l'élément de déverrouillage (76a, 76b) est disposé de manière immobile sur le corps de base (58) **et/ou en ce que** l'élément de déverrouillage (76a, 76b) est indépendant d'un déplacement de la section d'adaptateur (66, 67) par rapport au corps de base (58).

14. Dispositif de préhension (12) selon l'une des revendications précédentes, **caractérisé en ce que** le dispositif de préhension (12) présente deux éléments de préhension (38, 39) qui forment une paire d'éléments de préhension (40), de préférence les éléments de préhension (38, 39) pouvant être verrouillés de manière détachable sur des sections d'adaptateur (66, 67) respectives du corps de base (58) et les éléments de préhension (38, 39) étant déplaçables, en particulier pouvant être entraînés, le long de l'axe de préhension (42) dans des sens opposés l'un à l'autre.

15. Système (10) comprenant un dispositif de préhension (12) selon la revendication 14 comportant une première paire d'éléments de préhension (40), comprenant en outre une seconde paire d'éléments de préhension (41), un magasin (46) et un robot (14), le corps de base (58) du dispositif de préhension (12) étant disposé sur une région active (36) du robot (14), et la première paire d'éléments de préhension (40) ou la seconde paire d'éléments de préhension (41) pouvant être verrouillée ou étant verrouillée sélectivement sur les sections d'adaptateur (66, 67) du corps de base (58) et l'autre paire d'éléments de préhension pouvant être stockée ou étant stockée dans le magasin (46).

16. Système selon la revendication 15, **caractérisé en ce que** le magasin (46) présente des sections de stockage (50a, 50b), lesquelles sont réalisées respectivement pour le stockage d'une paire d'éléments de préhension (40, 41).

17. Système selon la revendication 16, **caractérisé en ce que,** dans un état, stocké sur l'une des sections de stockage (50a, 50b), d'une paire d'éléments de préhension (40, 41), ladite paire d'éléments de préhension (40, 41) est retenue par complémentarité de forme dans ou sur le magasin (46).
